# EUROPEAN PATENT SPECIFICATION

(11) **EP 3 442 209 B1**
(45) Date of publication and mention of the grant of the patent: **18.03.2020**
(21) Application number: 18198044.2
(22) Date of filing: 16.11.2016
(51) Int. Cl.: H04M 11/06, H04Q 1/14

(54) **SPLITTER DEVICE AND ARRANGEMENT**
SPLITTERVORRICHTUNG UND -ANORDNUNG
DISPOSITIF DE SÉPARATION ET ARRANGEMENT

(30) Priority: 24.11.2015 DE 102015223222
(43) Date of publication of application: 13.02.2019
(62) Divisional of application: 16199061.9
(73) Proprietor: Commscope Technologies LLC, Hickory, NC 28602 (US)
(72) Inventor: Franke, René, 12489 Berlin (DE); Kasprzyk, Michael, 53819 Neunkirchen-Seelscheid (DE); Stark, Joachim, 13595 Berlin (DE); Schümann, Sven, Hickory, NC 28602 (US); Gotzmann, Andreas, 12357 Berlin (DE)
(74) Representative: Patentanwälte Bressel und Partner mbB

(56) References cited:
- WO-A1-2013/189616
- JP-A- 2006 060 315
- US-A1- 2005 264 969
- US-A1- 2008 285 240

## Description

The invention relates to a splitter device and an arrangement with a splitter device.

Splitter devices have been known for a long time for transmitting XDSL and POTS (Plain Old Telephone Service) signals or ISDN (Integrated Services Digital Network) signals to the subscriber or dividing up the incoming signals from the subscriber into XDSL and POTS/ISDN signals which are then forwarded to a DSLAM and a PSTN network (Public Switched Telephone Network).

A splitter device of this type is known from WO 01/97532 A2, which can be inserted in cassette elements or connector elements instead of overvoltage protection devices in a distributor block.

A distributor connection module for telecommunications and data technology is known from WO 2013/189616 A1, comprising a housing, wherein electrical input and output contacts which are designed as wire connection contacts are arranged in the housing. The input and output contacts are preferably insulation displacement contacts. The input and output contacts are electrically and mechanically interconnected via interface contacts which are designed, for example, as double-spring contacts and as contact tongues. The input contacts are arranged in a base module and the output contacts are arranged in at least two sub-modules, wherein the submodules are removable from or connectable to each other independently of the base module. The interface contacts of the sub-modules can also be designed as printed circuit boards. Functional elements such as, for example, surge arresters are additionally arranged in the sub-modules.

The US 2008/285240 A1 teaches a splitter device for telecommunications and data technology, comprising a high-pass filter, a low-pass filter, at least one first port, at least one second port and at least one third port, wherein the high-pass filter is arranged between the first port and the third port and the low-pass filter is arranged between the second port and the third port, wherein the splitter device has at least one first switching element on the first port and at least one further switching element on the third port, the splitter device has at least one overvoltage protection circuit, wherein the at least one overvoltage protection circuit is arranged between the third port and the second switching element and/or between the second port and the low-pass filter, wherein the high-pass filter is situated between the first and third ports for signaling purposes in a first switching position of the first and second switching elements and, in a second switching position, the first and second switching elements are connected to one another directly.

The JP 2006 060315 A teaches a device with a built-in splitter function in which it is possible to automatically switch connection / disconnection of the built-in splitter function depending on whether the device is connected to an external splitter device or not. A switching control unit includes a monitoring unit that monitors an energization state of an energization path that energizes a data communication signal input from an input interface, and receives a notification from the monitoring unit about the energization state of the energization path, the internal splitter is connected when a direct current is detected from the energization path, and the internal splitter is disconnected when a direct current is not detected from the energization path.

The US 2005/0264969 A1 discloses a splitter device with integrated protection circuit.

The invention is based on the technical problem of providing a splitter device which is flexibly adaptable to different conditions. A further technical problem is the provision of an arrangement with a splitter device of this type which allows the splitter device to be looped into an existing distributor device.

The technical problem is solved by a splitter device with the features of claim 1 and an arrangement with the features of claim 10. Further advantageous designs of the invention can be found in the subclaims.

For this purpose, the splitter device comprises a high-pass filter, a low-pass filter, at least one first port, at least one second port and at least one third port, wherein the high-pass filter is arranged between the first and third port and the low-pass filter is arranged between the second and third port. The first port serves for the connection to a DSLAM for XDSL signals. The second port serves for the connection to a PSTN for POTS or ISDN signals, and the third port serves for the connection of a subscriber. The splitter device has at least one first switching element on the first port and at least one second switching element on the third port. The high-pass filter is switchable between the first and the third port by means of the first and second switching element. The splitter device has at least one overvoltage protection, wherein the at least one overvoltage protection circuit is arranged between the third port and the second switching element and/or between the second port and the low-pass filter, wherein the high-pass filter is situated between the first and third ports for signalling purposes in a first switching position of the first and second switching elements, and, in a second switching position, the first and second switching elements are connected to one another directly.

The circuit is designed in such a way that at least one overvoltage protection apparatus is arranged permanently on the at least one port and thus protects the technology downstream thereof. In this case, the port on which the overvoltage protection circuit is present may be dependent on the specifications of the network operator; in particular this can take into consideration where the occurrence of overvoltages in the infrastructure is particularly high. There may also be a respective overvoltage protection circuit arranged on each of the three ports in this case. This requires a corresponding number of components, however.

The splitter device has a control unit which controls the switching elements. A voltage supply, for example in the form of a battery, is preferably assigned to said control unit. Alternatively, the energy can also be transmitted via the ports.

The control unit is designed in such a way that, on picking up a control signal in form of a DC sequence or a corresponding trigger, it disconnects the high-pass filter temporarily for a predefined time period or permanently between the first and third port. For example, an ILTF or MELT measurement can thus be carried out. To do this, for example, an ILTF sequence is transmitted from the DSLAM via the first port and is picked up by the control unit. The high-pass filter is disconnected and the ILTF measurement can be carried out into the subscriber line. On completion of the measurement, the high-pass filter is then reconnected. To do this, the control unit may, for example, be designed with a, preferably programmable, timer. However, the switchover may also be permanent, for example because the subscriber no longer requires the PSTN connection with the POTS/ISDN signals.

In an embodiment, at least one voltage or current sensor is disposed on the second port, wherein the control unit is designed in such a way that, if the voltage or current sensor detects no signal, the overvoltage protection circuit is switched between the first and the third port. This means that the high-pass filter can be disconnected whenever no POTS/ISDN signal is present.

In an embodiment, the splitter device has precisely two overvoltage protection circuits, wherein the first overvoltage protection circuit is arranged between the second port and the low-pass filter and the second overvoltage protection circuit is arranged between the third port and the second switching element. Although this embodiment requires two overvoltage protection circuits, it has the advantage that the components within the splitter device are better protected. This is based on the insight that overvoltages frequently arise on the subscriber lines and the lines to the PSTN, whereas this is relatively improbable in the DSLAM. Therefore, the two overvoltage circuits in this circuit block the overvoltages effectively and protect both the splitter device itself and DSLAM on the first port.

The splitter device preferably has at least two first, at least two second and at least two third ports so that the data transmission can be implemented via wire pairs. In one embodiment, the splitter device has precisely two first, second and third ports.

In a further embodiment, the first and second switching elements are designed as relays so that the respectively unused circuit parts are galvanically isolated.

In a further embodiment, the splitter device is designed as a plug or magazine which can then be inserted, for example, into disconnection point contacts of a distributor connection module. Alternatively, the splitter device is integrated into a distributor connection module.

In a further embodiment, the splitter device is integrated into a sub-module of a distributor connection module, wherein the distributor connection module is formed by a base module and at least two sub-modules. In terms of the design of the base module and the sub-modules, reference is made to WO 2013/189616 A1. A printed circuit board which accommodates the components of the splitter device and forms the interface contacts is preferably arranged in the sub-module.

In a preferred embodiment, the first port is formed by the interface contact of the sub-module and the second and third ports are formed by the output contacts of the sub-module. The advantage is that the wiring of the XDSL lines is implemented on the base module, which normally requires no further modification.

If wire pairs are used, four output contacts are then required for the wire pair to the subscriber and the wire pair to the PSTN. One sub-module is preferably assigned to precisely one subscriber, so that the sub-module has four output contacts.

The invention is explained in detail below with reference to a preferred example embodiment. In the figures:
- Fig. 1: shows a schematic block diagram of a splitter device in a first embodiment not being part of the invention,
- Fig. 2: shows a schematic block diagram of an arrangement with a splitter device,
- Fig. 3: shows a schematic block diagram of a splitter device in a second embodiment not being part of the invention, and
- Fig. 4: shows a schematic block diagram of a splitter arrangement in a third embodiment.

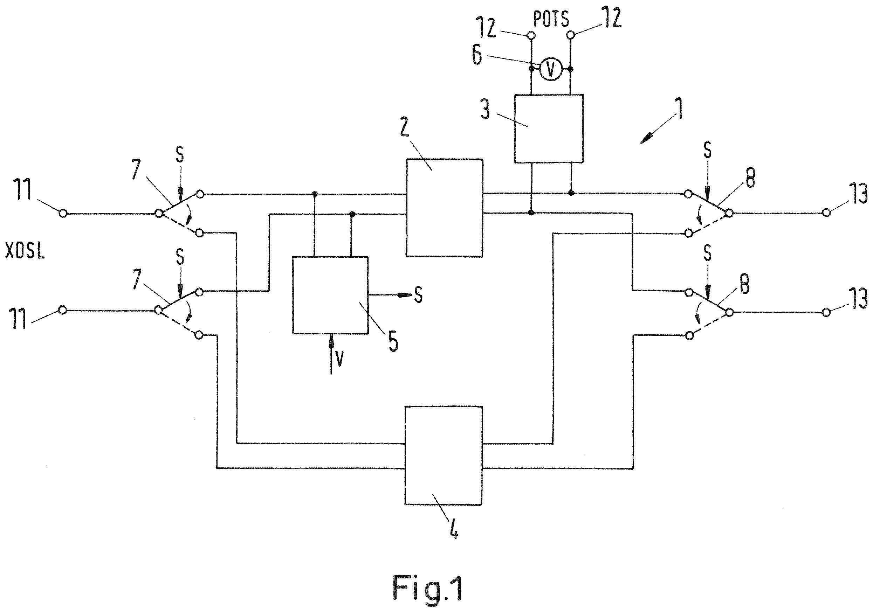

Fig. 1 shows a splitter device 1 which has two first ports 11, two second ports 12 and two third ports 13. Furthermore, the splitter device 1 has a high-pass filter 2, a low-pass filter 3, an overvoltage protection circuit 4, a control unit 5 and a voltage sensor 6. Furthermore, two first switching elements 7 which are preferably designed as relays are arranged between the two first ports 11 and the high-pass filter 2 or the overvoltage protection circuit 4. Two second switching elements 8 are arranged between the high-pass filter 2 or the overvoltage protection circuit 4 and the two third ports 13. The two first switching elements 7 and the two switching elements 8 in each case have a first switch position and a second switch position, wherein the first switch position is shown by a continuous line and the second switch position by a dotted line. In the first switch position, the high-pass filter 2 is located between the first ports 11 and the third ports 13 and, in the second switch position, the overvoltage protection circuit 4 is located between the first ports 11 and the third ports 13. The low-pass filter 3 is located between the second ports 12 and the second switching elements 8 and is connected to the high-pass filter 2. The voltage sensor 6 is located between the second ports 12 and the low-pass filter 3. The first and second switching elements 7, 8 are controlled by the control unit 5 which generates a control signal S for this purpose. The control unit 5 evaluates the signals V of the voltage sensor 6 and the signals between the first switching elements 7 and the high-pass filter 2 which are, for example, tapped with high impedance in order to influence the signal flow as little as possible. The first ports 11 are connected to an XDSL data source (e.g. a DSLAM). The second ports 12 are connected to a PSTN and the third ports 13 are connected to a subscriber.

The splitter device 1 is explained below in its different modes of operation.

In the first switch position, the splitter device operates in the same way as a conventional splitter device and the high-frequency XDSL signals and the low-frequency POTS/ISDN signals are linked and transmitted to the subscriber. The incoming signals from the subscriber are divided up accordingly into XDSL signals and POTS/ISDN signals via the high-pass filter 2 or the low-pass filter 3. A separate overvoltage protection is dispensed with and said protection is provided via the high-pass filter 2 which is destroyed at an early stage if overvoltages occur, thereby interrupting the connection.

If no POTS/ISDN signals are present for whatever reason, the division of the signals via the high-pass filter 2 and the low-pass filter 3 is not required. In this case, the XDSL signal can be transmitted directly to the subscriber. In this case, the first switching elements 7 and the second switching elements 8 are switched into the second switch position, so that the overvoltage protection circuit 4 is located between the first ports 11 and the third ports 13. The absence of POTS/ISDN signals is detected by the voltage sensor 6 and is reported via the signal V to the control unit 5 which then generates the switching signals S. Alternatively, in one design of the first and second switching elements 7, 8 as relays, it can be provided that the field coils of the relays are arranged on the second ports 12 instead of the voltage sensor 6. If no POTS signal is then present, the relays drop out and switch to the second switch position.

It can furthermore be provided that the control unit 5 is instructed via an external command (for example from a higher-order management) to switch the first and second switch elements 7, 8 to the second switch position.

It can furthermore be provided that an ILTF measurement is to be carried out with which the high-pass filter 2 would interfere. For this purpose, a corresponding DC sequence is transmitted via the first ports 11 and is picked up by the control unit 5 upstream of the high-pass filter 2. The control unit 5 then switches the first and second switching elements 7, 8 to the second switch position for the time of the subsequent measurement. The measurement period may, for example, be set via a timer in the control unit 5. Alternatively to the DC sequence, a corresponding trigger, e.g. from the ILTF or MELT measurement, can also be used, which is then evaluated by the control unit 5.

The splitter device 1 can be integrated into a sub-module of a distributor connection module according to WO 2013/189616 A1, wherein the wires for XDSL signals are then connected to the base module of the distributor connection module and are then tapped via the interface contacts of the sub-modules as first ports 11.

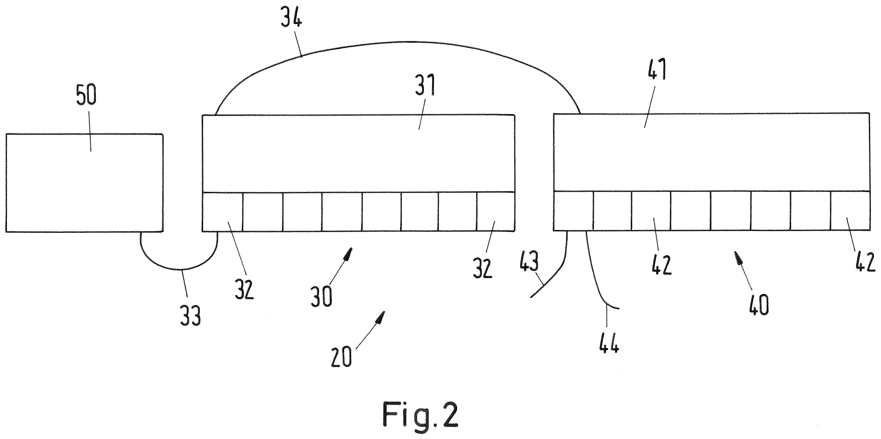

Conversely, if a cabling already exists, the splitter device 1 can be looped into the existing cabling according to an arrangement 20 as shown in Fig. 2.

The arrangement comprises a first distributor connection module 30 and a second distributor connection module 40, wherein each distributor connection module 30, 40 comprises a base module 31, 41 and in each case eight sub-modules 32, 42. The XDSL signals are present on a distributor device 50. The XDSL signals are switched onto the sub-modules 32 of the first distributor connection module 30 by means of XDSL jumper wires 33, wherein only one XDSL jumper wire 33 is shown in Fig. 2. The base modules 31, 41 of the two distributor connection modules 30, 40 are hardwired in advance by means of jumper wires 34, wherein again only one is shown by way of example. The splitter devices 1 according to Fig. 1 are then arranged in the sub-modules 42 of the second distributor connection module 40. The interface contact of the sub-module 42 forms the first ports 11, whereas the output contacts of the sub-module 42 designed as wire connection contacts form the second ports 12 and third ports 13 to which the POTS/ISDN wires 43 and subscriber lines 44 are then connected. The XDSL jumper wires 33, the jumper wires 34, the POTS/ISDN wires 43 and the subscriber lines 44 are preferably wire pairs, wherein one sub-module 42 is furthermore preferably assigned in each case to precisely one subscriber.

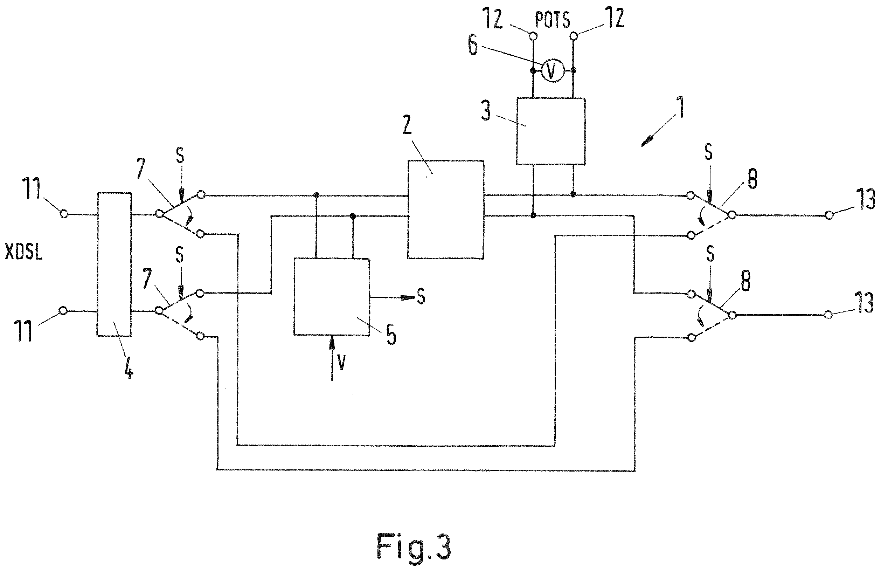

Fig. 3 shows a splitter device 1 in an alternative embodiment which has two first ports 11, two second ports 12 and two third ports 13. The splitter device 1 furthermore has a high-pass filter 2, a low-pass filter 3, an overvoltage protection circuit 4, a control unit 5 and a voltage sensor 6. The overvoltage protection circuit 4 is furthermore arranged between the two first ports 11 and the two first switching elements 7. The two first switching elements 7 are arranged between the overvoltage protection circuit 4 and the high-pass filter 2 or two second switching elements 8 on the third ports 13. The first and second switching elements 7, 8 are preferably designed as relays. The two first switching elements 7 and the two switching elements 8 in each case have a first switch position and a second switch position, wherein the first switch position is shown by a continuous line and the second switch position by a dotted line. In the first switch position, the overvoltage protection circuit 4 and the high-pass filter 2 are located between the first ports 11 and the third ports 13, and in the second switch position only the overvoltage protection circuit 4 is located between the first ports 11 and the third ports 13. The low-pass filter 3 is located between the second ports 12 and the second switching elements 8 and is connected to the high-pass filter 2. The voltage sensor 6 is located between the second ports 12 and the low-pass filter 3. The first and second switching elements 7, 8 are controlled by the control unit 5, which generates a control signal S for this purpose. The control unit 5 evaluates the signals V of the voltage sensor 6 and the signals between the first switching elements 7 and the high-pass filter 2 which, for example, are tapped with high impedance in order to influence the signal flow as little as possible. The first ports 11 are connected to an XDSL data source (e.g. a DSLAM) . The second ports 12 are connected to a PSTN and the third ports 13 to a subscriber.

The splitter device 1 is explained below in its different modes of operation.

In the first switch position, the splitter device operates in the same way as a conventional splitter device and the high-frequency XDSL signals and the low-frequency POTS/ISDN signals are linked and transmitted to the subscriber. The incoming signals from the subscriber are divided up accordingly into XDSL signals and POTS/ISDN signals via the high-pass filter 2 or the low-pass filter 3. Although the high-pass filter 2 is destroyed at an early stage if overvoltages occur, thereby interrupting the connection, the overvoltage protection circuit 4 is switched between the first port and the high-pass filter 2 in order to further increase the protective effect against damage to the DSLAM by overvoltage events.

If no POTS/ISDN signals are present for whatever reason, the division of the signals via the high-pass filter 2 and the low-pass filter 3 is not required. In this case, the XDSL signal can be transmitted directly to the subscriber. To do this, the first switching elements 7 and the second switching elements 8 are switched into the second switch position, so that the overvoltage protection circuit 4 is located between the first ports 11 and the third ports 13. The absence of POTS/ISDN signals is detected by the voltage sensor 6 and is reported via the signal V to the control unit 5 which then generates the switching signals S.

Alternatively, in one design of the first and second switching elements 7, 8 as relays, it can be provided that the field coils of the relays are arranged on the second ports 12 instead of the voltage sensor 6. If no POTS signal is then present, the relays drop out and switch to the second switch position.

It can furthermore be provided that the control unit 5 is instructed via an external command (for example from a higher-order management) to switch the first and second switch elements 7, 8 to the second switch position.

In terms of the switchover on the basis of ILTF or MELT measurements, reference can be made to the details described in relation to Fig. 1.

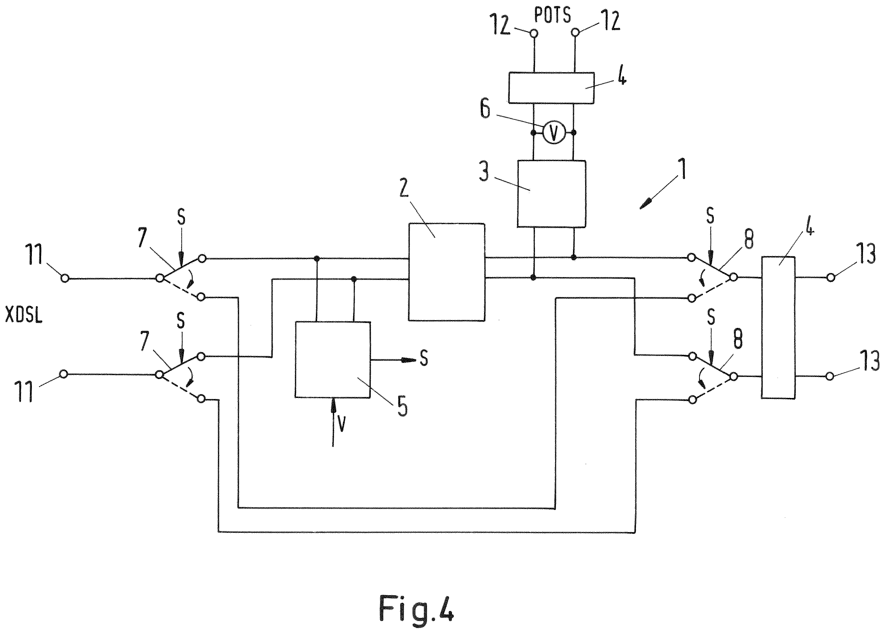

Fig. 4 shows a further alternative embodiment for a splitter device 1. In contrast to the embodiment shown in Fig. 3, the splitter device 1 has two overvoltage protection circuits 4, wherein a first overvoltage protection circuit 4 is situated between the second ports 12 and the low-pass filter 3 or the voltage sensor 6 and a second overvoltage protection circuit 4 is situated between the third ports 13 and the second switching elements 8. The two overvoltage protection circuits 4 are permanently in effect and protect the splitter device 1 and also the xDSL data source on the first ports 11 against overvoltages from the subscriber lines or the POTS lines. Otherwise, reference can be made to the full content of the details described in relation to the Fig. 3.

## Claims

1. Splitter device (1) for telecommunications and data technology, comprising a high-pass filter (2), a low-pass filter (3), at least one first port (11), at least one second port (12) and at least one third port (13), wherein the high-pass filter (2) is arranged between the first port (11) and the third port (13) and the low-pass filter (3) is arranged between the second port (12) and the third port (13), wherein
the splitter device (1) has at least one first switching element (7) on the first port (11) and at least one further switching element (8) on the third port (13),the splitter device (1) has at least one overvoltage protection circuit (4), wherein the at least one overvoltage protection circuit (4) is arranged between the third port (13) and the second switching element (8) and/or between the second port (12) and the low- pass filter (3), wherein the high-pass filter (2) is situated between the first and third ports (11,13) for signaling purposes in a first switching position of the first and second switching elements (7, 8) and, in a second switching position, the first and second switching elements (7, 8) are connected to one another directly,
**characterized in that**
the splitter device (1) has a control unit (5) which controls the switching elements (7, 8) wherein the control unit (5) is designed in such a way that on picking up a separate DC sequence or a corresponding trigger signal over the first port (11) to switch the switching elements (7, 8) temporarily for a predefined time period or permanently from the first switching position to the second switching position.

2. Splitter device according to claim 1, **characterized in that** at least a voltage or current sensor (6) is diposed on the second port (12), wherein the control unit (5) is designed in such a way that, if the voltage or current sensor (6) detects no signal (V), the switching elements (7, 8) are switched from the first switching position to the second switching position.

3. Splitter device according to claim 1 or 2, **characterized in that** the splitter device (1) has precisely two overvoltage protection circuits (4), wherein the first overvoltage protection circuit (4) is arranged between the second port (12) and the low-pass filter (3) and the second overvoltage protection circuit (4) is arranged between the third port (13) and the second switching element (8).

4. Splitter device according to any one of the preceding claims, **characterized in that** the splitter device (1) has at least two first ports (11), at least two second ports (12) and at least two third ports (13), wherein two of the ports (11, 12, 13) are in each case assigned to a subscriber.

5. Splitter device according to any one of the preceding claims, **characterized in that** the first and second switching elements (7, 8) are designed as relays.

6. Splitter device according to claim 5, **characterized in that** the overvoltage protection device (4) is switched between the first port (11) and the third port (13) when the relays are in a rest position.

7. Splitter device according to any one of the preceding claims, **characterized in that** the splitter device (1) is designed as a plug or magazine or is integrated into a distributor connection module (40).

8. Splitter device according to claim 7, **characterized in that** the splitter device (1) is integrated into a sub-module (42) of a distributor connection module (40), wherein the distributor connection module (40) is formed by a base module (41) and at least two sub-modules (42).

9. Splitter device according to claim 8, **characterized in that** the first port (11) is formed by the interface contacts of the sub-module (42) and the second and third port (12, 13) are formed by the output contacts of the sub-module (42).

10. Arrangement (20) with a splitter device (1) as claimed in any one of claims 7 to 9, comprising at least one first distributor connection module (30) and one second distributor connection module (40), wherein each distributor connection module (30, 40) comprises a base module (31, 41) and at least two sub-modules (32, 42), wherein the two base modules (31, 41) are electrically connected via jumper wires (34), wherein XDSL jumper wires (33) are connected to the sub-modules (32) of the first distributor connection module (30) and the splitter devices (1) are integrated into the sub- modules (42) of the second distributor connection module (40).

## Patentansprüche

1. Splittereinrichtung (1) für die Telekommunikations- und Datentechnik, umfassend einen Hochpassfilter (2), einen Tiefpassfilter (3), mindestens einen ersten Port (11), mindestens einen zweiten Port (12) und mindestens einen dritten Port (13), wobei zwischen dem ersten Port (11) und dem dritten Port (13) der Hochpassfilter (2) und zwischen dem zweiten Port (12) und dem dritten Port (13) der Tiefpassfilter (3) angeordnet ist, wobei die Splittereinrichtung (1) mindestens ein erstes Schaltelement (7) am ersten Port (11) und mindestens ein weiteres Schaltelement (8) am dritten Port (13) aufweist, die Splittereinrichtung (1) mindestens eine Überspannungsschutzschaltung (4) aufweist, wobei die mindestens eine Überspannungsschutzschaltung (4) zwischen dem dritten Port (13) und dem zweiten Schaltelement (8) und/oder zwischen dem zweiten Port (12) und dem Tiefpassfilter (3) angeordnet ist, wobei in einer ersten Schaltstellung des ersten und zweiten Schaltelementes (7, 8) der Hochpassfilter (2) signaltechnisch zwischen dem ersten und dem dritten Port (11, 13) liegt und in einer zweiten Schaltstellung die ersten und zweiten Schaltelemente (7, 8) direkt miteinander verbunden sind,
**dadurch gekennzeichnet, dass**
die Splittereinrichtung (1) eine Steuereinheit (5) aufweist, die die Schaltelemente (7, 8) ansteuert, wobei die Steuereinheit (5) derart ausgebildet ist, dass bei Erfassung einer separaten DC-Sequenz oder eines entsprechenden Triggersignals über den ersten Port (11) die Schaltelemente (7, 8) temporär für eine vorgegebene Zeitdauer oder dauerhaft aus der ersten Schaltstellung in die zweite Schaltstellung geschaltet werden.

2. Splittereinrichtung nach Anspruch 1, **dadurch gekennzeichnet, dass** am zweiten Port (12) mindestens ein Spannungs- oder Stromsensor (6) angeordnet ist, wobei die Steuereinheit (5) derart ausgebildet ist, dass, wenn der Spannungs- oder Stromsensor (6) kein Signal (V) erfasst, die Schaltelemente (7, 8) aus der ersten Schaltstellung in die zweite Schaltstellung geschaltet werden.

3. Splittereinrichtung nach Anspruch 1 oder 2, **dadurch gekennzeichnet, dass** die Splittereinrichtung (1) genau zwei Überspannungsschutzschaltungen (4) aufweist, wobei die erste Überspannungsschutzschaltung (4) zwischen dem zweiten Port (12) und dem Tiefpassfilter (3) angeordnet ist und die zweite Überspannungsschutzschaltung (4) zwischen dem dritten Port (13) und dem zweiten Schaltelement (8) angeordnet ist.

4. Splittereinrichtung nach einem der vorangegangenen Ansprüche, **dadurch gekennzeichnet, dass** die Splittereinrichtung (1) mindestens zwei erste Ports (11), mindestens zwei zweite Ports (12) und mindestens zwei dritte Ports (13) aufweist, wobei jeweils zwei der Ports (11, 12, 13) einem Teilnehmer zugeordnet sind.

5. Splittereinrichtung nach einem der vorangegangenen Ansprüche, **dadurch gekennzeichnet, dass** die ersten und zweiten Schaltelemente (7, 8) als Relais ausgebildet sind.

6. Splittereinrichtung nach Anspruch 5, **dadurch gekennzeichnet, dass** in einer Ruhelage der Relais die Überspannungsschutzeinrichtung (4) zwischen den ersten Port (11) und dritten Port (13) geschaltet ist.

7. Splittereinrichtung nach einem der vorangegangenen Ansprüche, **dadurch gekennzeichnet, dass** die Splittereinrichtung (1) als Stecker oder Magazin ausgebildet ist oder in ein Verteileranschlussmodul (40) integriert ist.

8. Splittereinrichtung nach Anspruch 7, **dadurch gekennzeichnet, dass** die Splittereinrichtung (1) in einem Teilmodul (42) eines Verteileranschlussmoduls (40) integriert ist, wobei das Verteileranschlussmodul (40) durch ein Basismodul (41) und mindestens zwei Teilmodule (42) gebildet wird.

9. Splittereinrichtung nach Anspruch 8, **dadurch gekennzeichnet, dass** der erste Port (11) durch die Schnittstellenkontakte des Teilmoduls (42) und der zweite und dritte Port (12, 13) durch die Ausgangskontakte des Teilmoduls (42) gebildet werden.

10. Anordnung (20) mit einer Splittereinrichtung (1) nach einem der Ansprüche 7 bis 9, umfassend mindestens ein erstes Verteileranschlussmodul (30) und ein zweites Verteileranschlussmodul (40), wobei jedes Verteileranschlussmodul (30, 40) ein Basismodul (31, 41) und mindestens zwei Teilmodule (32, 42) umfasst, wobei die beiden Basismodule (31, 41) elektrisch über Rangierdrähte (34) verbunden sind, wobei an die Teilmodule (32) des ersten Verteileranschlussmoduls (30) XDSL-Rangierdrähte (33) angeschlossen sind und in den Teilmodulen (42) des zweiten Verteileranschlussmoduls (40) die Splittereinrichtungen (1) integriert sind.

## Revendications

1. Dispositif séparateur (1) pour télécommunications et technologie de données, comprenant un filtre passe-haut (2), un filtre passe-bas (3), au moins un premier port (11), au moins un deuxième port (12) et au moins un troisième port (13), dans lequel le filtre passe-haut (2) est agencé entre le premier port (11) et le troisième port (13) et le filtre passe-bas (3) est agencé entre le deuxième port (12) et le troisième port (13), le dispositif séparateur (1) présente au moins un premier élément de commutation (7) sur le premier port (11) et au moins un autre élément de commutation (8) sur le troisième port (13), le dispositif séparateur (1) présente au moins un circuit de protection contre les surtensions (4), le ou les circuits de protection contre les surtensions (4) étant agencés entre le troisième port (13) et le second élément de commutation (8) et/ou entre le second port (12) et le filtre passe-bas (3), dans lequel le filtre passe-haut (2) est situé entre les premier et troisième ports (11, 13) à des fins de signalisation dans une première position de commutation des premier et deuxième éléments de commutation (7, 8) et, dans une seconde position de commutation, les premier et deuxième éléments de commutation (7, 8) sont connectés directement l'un à l'autre, **caractérisé en ce que**
le dispositif séparateur (1) comporte une unité de commande (5) qui commande les éléments de commutation (7, 8), l'unité de commande (5) est conçue de telle sorte que, en captant une sequence DC distincte ou un signal de déclenchement correspondant par le premier port (11) pour commuter les relais (7, 8) temporairement pendant une période temps prédéfinie ou de manière permanente de la première position de commutation à la deuxième position de commutation.

2. Dispositif séparateur selon la revendication 1,
**caractérisé en ce qu'**au moins un capteur de tension ou de courant (6) est disposé sur le deuxième port (12), dans lequel l'unité de commande (5) est conçue de telle sorte que si le capteur de tension ou de courant (6) ne détecte aucun signal (V), les relais (7, 8) sont commutés de la première position de commutation à la deuxième position de commutation.

3. Dispositif séparateur selon la revendication 1 ou 2,
**caractérisé en ce que** le dispositif séparateur (1) a précisément deux circuits de protection contre les surtensions (4), dans lequel le premier circuit de protection contre les surtensions (4) est disposé entre le deuxième port (12) et le filtre passe-bas (3) et le deuxième circuit de protection contre les surtensions (4) est disposé entre le troisième port (13) et le deuxième relais (8).

4. Dispositif séparateur selon l'une quelconque des revendications précédentes,
**caractérisé en ce que** le dispositif séparateur (1) comporte au moins deux premiers ports (11), au moins deux deuxièmes ports (12) et au moins deux troisièmes ports (13), deux des ports (11, 12, 13) étant dans chaque cas attribués à un abonné.

5. Dispositif séparateur selon l'une quelconque des revendications précédentes,
**caractérisé en ce que** les premier et deuxième éléments de commutation (7, 8) sont conçus comme des relais.

6. Dispositif séparateur selon la revendication 5,
**caractérisé en ce que** le dispositif de protection contre les surtensions (4) est commuté entre le premier port (11) et le troisième port (13) lorsque les relais sont en position de repos.

7. Dispositif séparateur selon l'une quelconque des revendications précédentes,
**caractérisé en ce que** le dispositif séparateur (1) est conçu sous forme de fiche ou de magasin ou est intégré dans un module de connexion au distributeur (40).

8. Dispositif séparateur selon la revendication 7,
**caractérisé en ce que** le dispositif séparateur (1) est intégré dans un sous-module (42) d'un module de connexion au distributeur (40), le module de connexion au distributeur (40) étant formé par un module de base (41) et au moins deux sous-modules (42).

9. Dispositif séparateur selon la revendication 8,
**caractérisé en ce que** le premier port (11) est formé par les contacts d'interface du sous-module (42) et les deuxième et troisième ports (12, 13) sont formés par les contacts de sortie du sous-module (42).

10. Agencement (20) comportant un dispositif séparateur (1) selon l'une quelconque des revendications 7 à 9, comprenant au moins un premier module de connexion au distributeur (30) et un deuxième module de connexion au distributeur (40),
dans lequel chaque module de connexion au distributeur (30, 40) comprend un module de base (31, 41) et au moins deux sous-modules (32, 42), dans lequel les deux modules de base (31, 41) sont connectés électriquement par des fils de liaison (34), dans lequel des fils de liaison XDSL (33) sont connectés aux sous-modules (32) du premier module de connexion au distributeur (30) et les dispositifs séparateurs (1) sont intégrés dans les sous-modules (42) du deuxième module de connexion au distributeur (40).
